# EUROPÄISCHE PATENTANMELDUNG

(11) **EP 3 855 375 A1**
(43) Veröffentlichungstag der Anmeldung: **28.07.2021**
(21) Anmeldenummer: 21151469.0
(22) Anmeldetag: 14.01.2021
(51) Int. Cl.: G06Q 10/06

(54) **IDENTIFIZIEREN VON ENGPÄSSEN IN ABLAUFPLÄNEN**

(30) Priorität: 22.01.2020 EP 20153089
(71) Anmelder: Bayer AG, 51373 Leverkusen (DE)
(72) Erfinder: Blank, Andreas, 10557 Berlin (DE); Esch, Hendrik, 51379 Leverkusen (DE); Schuon, Tobias, 51375 Leverkusen (DE); Rothe, Lars, 50679 Köln (DE)
(74) Vertreter: BIP Patents

(57) **Zusammenfassung**

Die vorliegende Erfindung befasst sich mit der Identifizierung von Engpässen in Ablaufplänen für die Durchführung einer Mehrzahl an Aufgaben unter Verwendung begrenzter Ressourcen. Gegenstände der vorliegenden Erfindung sind ein Computersystems, ein Computerprogrammprodukt und ein Verfahren zur Identifizierung von Engpässen in Ablaufplänen.

## Beschreibung

Die vorliegende Erfindung befasst sich mit der Identifizierung von Engpässen in Ablaufplänen für die Durchführung einer Mehrzahl an Aufgaben unter Verwendung begrenzter Ressourcen. Gegenstände der vorliegenden Erfindung sind ein Computersystem, ein Computerprogrammprodukt und ein Verfahren zur Identifizierung von Engpässen in Ablaufplänen.

Es gibt eine Vielzahl an Bereichen und Gegebenheiten, in/bei denen Ablaufpläne erstellt werden müssen. Als ein Beispiel sei das Verpacken von Arzneimitteln genannt. Auf dem Weg vom Hersteller zum Anwender werden Arzneimittel durch eine Verpackung geschützt. Die Verpackung gewährleistet die Unversehrtheit, Haltbarkeit sowie die geeignete und anwenderfreundliche Entnahme des Produkts. Doch werden an Arzneimittelverpackungen weitere Anforderungen gestellt, denn die Verpackung samt ihrer Kennzeichnung ist ein fester Bestandteil eines Fertigarzneimittels; sie muss im Rahmen der Zulassung genehmigt werden. Neben dem Produktschutz ist vor allem dafür Sorge zu tragen, dass bei der Produktion Verwechslungen und Kontaminationen ausgeschlossen sind, die Verpackung korrekt gekennzeichnet ist und sich alle notwendigen Informationen für eine gefahrlose und sachgerechte Anwendung darauf befinden. In Deutschland regelt das Gesetz über den Verkehr mit Arzneimitteln unter anderem auch die Kennzeichnung der Verpackung von Arzneimitteln (siehe insbesondere § 10 AMG). Die Anforderungen an eine Verpackung sind üblicherweise länderspezifisch; üblicherweise werden für jedes Land andere Verpackungen verwendet.

Unter dem Schlagwort "Gute Herstellungspraxis" (engl.: *Good Manufacturing Practice,* abgekürzt GMP) werden Richtlinien zur Qualitätssicherung der Produktionsabläufe und -umgebung in der Produktion von Arzneimitteln und Wirkstoffen, aber auch bei Kosmetika, Lebens- und Futtermitteln zusammengefasst. Der EU-GMP-Leitfaden für Human- und Tierarzneimittel konkretisiert die Richtlinie 2003/94/EG zur Festlegung der Grundsätze und Leitlinien der Guten Herstellungspraxis für Humanarzneimittel und für zur Anwendung beim Menschen bestimmte Prüfpräparate sowie die Richtlinie 1991/412/EWG zur Festlegung der Grundsätze und Leitlinien der Guten Herstellungspraxis für Tierarzneimittel. Teil II Abschnitt 9 umfasst Richtlinien zur Verpackung und Kennzeichnung. In den USA sind die Richtlinien der *Current Good Manufacturing Practice* (cGMP) im *Code of Federal Regulations* (CFR), der Sammlung US-amerikanischer Rechtstexte, unter 21 CFR 210 und 21 CFR 211 niedergelegt.

Das Verpacken von Arzneimitteln unterliegt also strengen Richtlinien.

Das Verpacken von Arzneimitteln erfolgt oftmals mittels einer Mehrzahl an Verpackungslinien. Eine Verpackungslinie umfasst üblicherweise eine Mehrzahl an Einheiten (Modulen), die unterschiedliche Funktionen ausführen: Einfüllen, Führen, Falten, Umschließen, Schneiden, Perforieren, Laminieren, Drucken, Bewegen, Stapeln, Kleben u.v.m. Dabei sind die Linien und Einheiten üblicherweise modular und flexibel einsetzbar, so dass auf einer Verpackungslinie, ggf. nach einem Umrüsten, verschiedene Arzneimittel verpackt werden können. Da es jedoch unterschiedliche Darreichungsformen von Arzneimitteln gibt (u.a. Tabletten, Kapseln, Tinkturen, Salben) und/oder die Verpackungseinheiten in Größe und Form variieren, verfügt ein Verpackungsbetrieb üblicherweise über eine Mehrzahl unterschiedlich einsetzbarer Verpackungslinien und Einheiten.

In der Zeitspanne, in der eine Verpackungslinie zum Verpacken eines spezifischen Arzneimittels eingesetzt wird, kann sie nicht gleichzeitig zum Verpacken eines anderen spezifischen Arzneimittels eingesetzt werden. Üblicherweise sind die Ressourcen also begrenzt, so dass eine Entscheidung getroffen werden muss, welches Arzneimittel in welcher Zeitspanne verpackt werden soll.

Üblich ist auch, dass für die Bedienung/Betreuung von unterschiedlichen Verpackungslinien und Apparaten unterschiedlich qualifizierte Mitarbeiter nötig sind. Das bedeutet, dass eine Verfügbarkeit einer Verpackungslinie nicht zwingend bedeutet, dass sie auch zum Verpacken eingesetzt werden kann (zum Beispiel dann nicht, wenn kein qualifiziertes Personal vorhanden ist, um die Verpackungslinie zu bedienen).

Weitere Limitierungen können sich daraus ergeben, dass Verpackungslinien und/oder Module umgerüstet und/oder gewartet werden müssen, und/oder GMP-Aktualisierungen (GMP Upgrade) erforderlich sind. Stillstände können sich auch aus der Notwendigkeit der Serialisierung und/oder Verfolgung (Track&Trace) von Produkten und/oder anderer Erfordernisse zur Erfüllung behördlicher Vorgaben ergeben.

Für das Verpacken einer Mehrzahl an unterschiedlichen Arzneimitteln in einem Verpackungsbetrieb ist es daher sinnvoll, einen Ablaufplan zu erstellen, der im Hinblick auf ein Optimierungsziel optimiert ist.

Ein Ablaufplan, der im Hinblick auf ein Optimierungsziel optimiert ist, stellt üblicherweise die unter den gegebenen Rahmenbedingungen beste Lösung für das Erfüllen einer Aufgabe dar. Aus dem Ablaufplan ist jedoch nicht unmittelbar ersichtlich, welche Engpässe vorliegen und wie die bestehenden Ressourcen angepasst werden sollten, um zukünftig eine höhere Leistung erbringen zu können.

Diesem Problem widmet sich die vorliegende Erfindung.

Die Gegenstände der vorliegenden unabhängigen Patentansprüche ermöglichen eine Identifizierung von Engpässen in Ablaufplänen und damit eine zielgerichtete Optimierung von Ressourcen. Bevorzugte Ausführungsformen finden sich in den abhängigen Patentansprüchen sowie in der vorliegenden Beschreibung und in den Zeichnungen.

Ein erster Gegenstand der vorliegenden Erfindung ist ein Computersystem umfassend:
- eine Datenbank oder mehrere Datenbanken, in der / in denen Ressourceninformationen über Ressourcen gespeichert sind,
- eine Empfangseinheit
- eine Steuer- und Recheneinheit und
- eine Ausgabeeinheit,
wobei die Steuer- und Recheneinheit konfiguriert ist, die Empfangseinheit zu veranlassen, Aufgabeninformationen zu empfangen, wobei die Aufgabeninformationen zumindest eine Mehrzahl von Prozessgegenständen spezifizieren, die jeweils einem oder mehreren Prozessen zugeführt werden sollen,
wobei die Steuer- und Recheneinheit konfiguriert ist, anhand der Aufgabeninformationen Prozesse zu spezifizieren, denen die Prozessgegenstände zugeführt werden sollen,
wobei die Steuer- und Recheneinheit konfiguriert ist, anhand der spezifizierten Prozesse Ressourcen zu spezifizieren, die zur Ausführung der Prozesse eingesetzt werden sollen,
wobei die Steuer- und Recheneinheit konfiguriert ist, einen Ablaufplan zu erstellen, wobei der Ablaufplan Angaben darüber umfasst,
∘ in welchen Zeitspannen die Prozesse ausgeführt werden sollen,
∘ welche Ressourcen zur Ausführung der Prozesse eingesetzt werden sollen,
wobei der Ablaufplan im Hinblick auf ein Optimierungsziel optimiert ist,
wobei die Steuer- und Recheneinheit konfiguriert ist, für mindestens eine Ressource einen Auslastungswert zu ermitteln, den Auslastungswert mit einem Referenzwert zu vergleichen und bei einer definierten Abweichung des Auslastungswerts von dem Referenzwert die Ausgabeeinheit zu veranlassen, eine Mitteilung über die Abweichung auszugeben.

Ein weiterer Gegenstand der vorliegenden Erfindung ist ein Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte auszuführen:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Ressourceninformationen, wobei die Ressourceninformationen diejenigen Ressourcen spezifizieren, die zur Ausführung der Prozesse eingesetzt werden sollen und/oder können,
- Erstellen eines Ablaufplans anhand der Aufgabeninformationen, der Prozessinformationen und der Ressourceninformationen, wobei der Ablaufplan Angaben darüber umfasst,
   - in welchen Zeitspannen die Prozesse ausgeführt werden sollen,
   - welche Ressourcen zur Ausführung der Prozesse eingesetzt werden sollen,
   wobei der Ablaufplan im Hinblick auf ein Optimierungsziel optimiert ist,
- Ermitteln mindestens eines Auslastungswerts für eine Ressource,
- Vergleichen des mindestens einen Auslastungswerts mit einem Referenzwert,
- im Fall einer definierten Abweichung des Auslastungswerts von dem Referenzwert: Ausgeben einer Mitteilung über die Abweichung.

Ein weiterer Gegenstand der vorliegenden Erfindung ist ein computer-implementiertes Verfahren umfassend die Schritte:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Ressourceninformationen, wobei die Ressourceninformationen diejenigen Ressourcen spezifizieren, die zur Ausführung der Prozesse eingesetzt werden sollen und/oder können,
- Erstellen eines Ablaufplans anhand der Aufgabeninformationen, der Prozessinformationen und der Ressourceninformationen, wobei der Ablaufplan Angaben darüber umfasst,
   - in welchen Zeitspannen die Prozesse ausgeführt werden sollen,
   - welche Ressourcen zur Ausführung der Prozesse eingesetzt werden sollen,
   wobei der Ablaufplan im Hinblick auf ein Optimierungsziel optimiert ist,
- Ermitteln mindestens eines Auslastungswerts für eine Ressource,
- Vergleichen des mindestens einen Auslastungswerts mit einem Referenzwert,
- im Fall einer definierten Abweichung des Auslastungswerts von dem Referenzwert: Ausgeben einer Mitteilung über die Abweichung.

Ein weiterer Gegenstand der vorliegenden Erfindung ist die Verwendung des erfindungsgemäßen Computersystems zum Identifizieren von Engpässen in Ablaufplänen für das Herstellen und/oder Verpacken von Gegenständen, insbesondere von Arzneimitteln, Pflanzenschutzmitteln, Schädlingsbekämpfungsmitteln und/oder Saatgut.

Die Erfindung wird nachstehend näher erläutert, ohne zwischen den Erfindungsgegenständen (Computersystem, Computerprogrammprodukt, Verfahren, Verwendung) zu unterscheiden. Die nachfolgenden Erläuterungen sollen vielmehr für alle Erfindungsgegenstände in analoger Weise gelten, unabhängig davon, in welchem Kontext (Computersystem, Computerprogrammprodukt, Verfahren, Verwendung) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung dient der Identifizierung von Engpässen in Ablaufplänen. Ein Ablaufplan ist eine Ansammlung von Informationen. Diese Informationen betreffen Prozessgegenstände, Prozesse, Ressourcen (insbesondere Betriebsmittel, Werkstoffe und Mitarbeiter) und Zeiten (Zeitpunkte und/oder Zeitspannen). Einem Ablaufplan kann entnommen werden, welche Prozesse an welchen Prozessgegenständen unter Verwendung welcher Ressourcen zu welchen Zeiten durchgeführt werden sollen.

Prozessgegenstände im Sinne der vorliegenden Erfindung sind (körperliche) Objekte, die einem oder mehreren Prozessen zugeführt werden. Beispiele für Prozessgegenstände sind Rohmaterialien, Zwischenprodukte und/oder Produkte. Vorzugsweise handelt es sich bei den Prozessgegenständen um Produkte, die erzeugt und/oder verpackt werden sollen. Besonders bevorzugt handelt es sich um Arzneimittel, Pflanzenschutzmittel, Schädlingsbekämpfungsmittel und/oder Saatgut, die/das erzeugt und/oder verpackt werden soll.

Ein Prozess im Sinne der vorliegenden Erfindung ist eine Aktion oder eine Mehrzahl an Aktionen, die mit oder an einem Prozessgegenstand durchgeführt wird/werden. Der Prozessgegenstand kann dabei reversibel oder irreversibel verändert werden oder unverändert bleiben. Vorzugsweise handelt es sich bei einem Prozess um einen oder mehrere oder alle Schritte zum Verpacken eines Objekts.

Eine Ressource ist allgemein ein Mittel, um ein Ziel zu verfolgen. Das Ziel ist die erfolgreiche Durchführung eines Prozesses oder eines oder mehrerer Prozessschritte. Eine Ressource kann ein materielles oder immaterielles Gut sein. In Betriebswirtschaft, Volkswirtschaft und Organisationen werden darunter meist Betriebsmittel, Geldmittel, Boden, Rohstoffe, Energie oder Personen (Mitarbeiter) und (Arbeits-)Zeit verstanden.

Ressourcen im Sinne der vorliegenden Erfindung sind alle Mittel, die zur Ausführung eines Prozesses eingesetzt werden. Üblicherweise kann ein Prozess ohne derartige Ressourcen gar nicht ausgeführt werden. Ressourcen sind ferner Mittel, die üblicherweise nur begrenzt verfügbar sind, weswegen nicht alle auszuführenden Prozesse gleichzeitig ausgeführt werden können, um eine bestehende Aufgabe oder mehrere bestehenden Aufgaben zu erledigen. Prozessgegenstände können als Ressourcen behandelt werden, insbesondere dann, wenn ein Prozessgegenstand mehreren Prozessen zugeführt werden soll, der Prozessgegenstand aber nicht geteilt und auf die verschiedenen Prozesse verteilt werden kann. Anders ausgedrückt ist ein Prozessgegenstand dann eine Ressource im Sinne der vorliegenden Erfindung, wenn seine Verfügbarkeit begrenzt ist und sich einschränkend auf die Erledigung einer oder mehrerer Aufgaben auswirken kann.

In der vorliegenden Beschreibung werden insbesondere folgende Ressourcen unterschieden: Mitarbeiter, Betriebsmittel, Werkstoffe und ggf. Hilfsmittel.

Ein Mitarbeiter ist diejenige natürliche Person, die einen Prozess initiiert, vorbereitet, ausführt, nachbereitet, auswertet und/oder betreut. Es ist denkbar, dass mehrere Mitarbeiter in einen Prozess involviert sind.

Ein Betriebsmittel im Sinne der vorliegenden Erfindung ist ein Mittel, das zur Durchführung eines Prozesses eingesetzt und dabei nicht verbraucht und/oder irreversibel verändert wird, so dass es nach einem durchlaufenen Prozess erneut in einem weiteren Prozess eingesetzt werden kann. Vorzugsweise handelt es sich um eine Vorrichtung, besonders bevorzugt um eine Vorrichtung zum Ausführen eines oder mehrere Schritte beim Herstellen und/oder Verpacken eines Objekts.

Ein Werkstoff im Sinne der vorliegenden Erfindung ist ein Rohstoff, Betriebsstoff, Halbfertig- oder Fertigfabrikat, der/das als Ausgangs- oder Grundstoff dazu bestimmt ist, in die Erzeugnisse eines Betriebes einzugehen. Im Gegensatz zu den Betriebsmitteln wird der Werkstoff hierbei verbraucht und/oder irreversibel verändert und kann nach einem durchlaufenen Prozess nicht in einem weiteren Prozess eingesetzt werden. Beispiele für Werkstoffe sind alle Materialien, die in eine Verpackung einfließen bzw. die Verpackung ausmachen, inklusive der Klebstoffe und Druckfarben.

Es ist denkbar, dass für die Ausführung eines Prozesses Hilfsmittel eingesetzt werden. Bei einem Hilfsmittel handelt es sich (neben einem oder mehreren Betriebsmitteln und Werkstoffen) um ein weiteres Mittel, das bei der Ausführung eines Prozesses eingesetzt werden kann. Vorzugsweise handelt es sich bei einem Hilfsmittel um einen Stoff oder ein Stoffgemisch oder einen sonstigen körperlichen Gegenstand, der/das kein Bestandteil eines Zwischen- oder Endprodukts ist, aber zu dessen Erzeugung und/oder Prozessierung eingesetzt wird. Vorzugsweise wird das Hilfsmittel dabei verbraucht oder irreversibel verändert. Beispiele für Hilfsmittel sind Reinigungsmittel, Lösemittel, Filterstoffe, Extraktionsmittel, Druckluft, Inertgas, Ätzmittel und/oder dergleichen.

Betriebsmittel, Werkstoffe, Hilfsmittel und/oder Mitarbeiter werden in dieser Beschreibung zusammenfassend auch als Ressourcen bezeichnet.

Die Erstellung eines Ablaufplans erfolgt auf Basis einer Mehrzahl an zu erfüllenden Aufgaben. Eine Aufgabe (engl. *demand*) spezifiziert üblicherweise einen oder mehrere Prozessgegenstände sowie den Prozess oder die Prozesse, die ausgeführt werden sollen. Die Aufgabe kann ferner eine Frist spezifizieren, innerhalb der ein Prozess ausgeführt werden soll. Die Aufgabe kann ferner Betriebsmittel und/oder Werkstoffe und/oder Hilfsmittel spezifizieren, mit denen der Prozess ausgeführt werden soll. Die Aufgabe kann ferner Befähigungen und/oder Sachkenntnisse spezifizieren, die ein Mitarbeiter aufweisen muss, um den Prozess ausführen und/oder mit dem Prozessgegenstand umgehen zu dürfen / zu können. In einer bevorzugten Ausführungsform spezifiziert eine Aufgabe lediglich Prozessgegenstände, Prozesse, die mit den Prozessgegenständen ausgeführt werden sollen, und optional Fristen, in denen die Prozesse ausgeführt werden sollen.

Eine Aufgabe kann mehrere (Teil-)Aufgaben umfassen und mehrere (Teil-)Aufgaben können zu einer (Gesamt-)aufgabe zusammengefasst werden.

Die Informationen, die eine zu erledigende Aufgabe oder mehrere zu erledigende Aufgaben spezifizieren, sind in Aufgabeninformationen enthalten. Aufgabeninformationen werden in einem ersten Schritt des erfindungsgemäßen Verfahrens von dem erfindungsgemäßen Computersystem empfangen. Der Empfang erfolgt beispielsweise auf elektronischem Weg (z.B. über E-Mail oder dergleichen) z.B. über ein Netzwerk, mit dem das erfindungsgemäße Computersystem verbunden ist. Denkbar ist auch, dass Aufgabeninformationen zusammen mit Prozessgegenständen übermittelt werden. Ein denkbares Szenario ist beispielsweise, dass Prozessgegenstände in einem Betrieb eintreffen, und diese Prozessgegenstände Aufgabeninformationen umfassen.

Die Aufgabeninformationen enthalten zumindest Informationen über die Prozessgegenstände, die einem oder mehreren Prozessen zugeführt werden sollen. Anhand der Aufgabeninformationen lassen sich jedenfalls die Prozessgegenstände eindeutig spezifizieren.

Bei der Herstellung von Produkten spezifizieren die Aufgabeninformationen beispielsweise die Rohstoffe und/oder Zwischenprodukte, aus denen Produkte erzeugt werden und ggf. Bedingungen bei der Herstellung.

Beim Verpacken von Objekten spezifizieren die Aufgabeninformationen beispielsweise die Objekte, die zu verpacken sind und ggf. die Art der Verpackung (Verpackungsmittel, Kennzeichnungen und dergleichen).

Umfassen die Aufgabeninformationen nicht alle Informationen, die zur Erfüllung der Aufgabe erforderlich sind, so können die fehlenden Informationen anhand des spezifizierten Prozessgegenstandes aus einer oder mehreren Datenbanken ermittelt werden.

Es ist denkbar, dass die Prozessgegenstände jeweils eine eindeutige Kennung umfassen. Anhand einer solchen eindeutigen Kennung ist ein Prozessgegenstand eindeutig identifizierbar. Die eindeutige Kennung kann ein Name und/oder eine Nummer und/oder ein alphanumerischer Code und/oder ein Binärcode und/oder dergleichen sein. Die eindeutige Kennung kann an dem Prozessgegenstand oder an einem Behälter, in dem sich der Prozessgegenstand befindet, oder auf einem Dokument, das zusammen mit dem Prozessgegenstand übermittelt worden ist, angebracht sein (z.B. in Form eines Etiketts oder Aufdrucks oder einer Gravur oder dergleichen). Die Erfassung einer solchen eindeutigen Kennung kann beispielsweise durch Eingabe über ein Eingabemittel (z.B. eine Tastatur, ein Touchscreen, ein Mikrofon (per Spracheingabe) oder dergleichen) in das erfindungsgemäße Computersystem erfolgen. Vorzugsweise ist die eindeutige Kennung in Form eines maschinenlesbaren Codes, beispielsweise eines optoelektronisch lesbaren Codes (z.B. ein Strichcode oder ein Matrixcode oder dergleichen) oder in Form eines mittels Funk auslesbaren elektronischen Speichers (z.B. als RFID-Tag) oder dergleichen vorhanden und kann mit einem geeigneten Lesegerät (Strichcodescanner, Kamera, RFID-Lesegerät oder dergleichen) an das erfindungsgemäße Computersystem oder an ein anderes Computersystem übertragen werden, mit dem das erfindungsgemäße Computersystem z.B. über ein Netzwerk verbunden sein kann. Denkbar ist aber auch, dass eine solche eindeutige Kennung unabhängig von dem Prozessgegenstand zum Beispiel auf elektronischem Weg (als E-Mail oder dergleichen) an das erfindungsgemäße Computersystem übermittelt wird. Anhand einer solchen eindeutigen Kennung können weitere Informationen zu dem jeweiligen Prozessgegenstand z.B. aus einer Datenbank ermittelt werden, wie beispielsweise Art des Prozessgegenstands (z.B. um welche Charge es sich handelt), Eigenschaften des Prozessgegenstands (z.B. Gefahrenhinweise oder sonstige Hinweise zum Umgang mit dem Prozessgegenstand), Prozesse, die mit dem Prozessgegenständen ausgeführt werden können und/oder sollen, Prozessparameter für die Durchführung eines Prozesses mit dem Prozessgegenstand und/oder dergleichen.

Analog zu den Prozessgegenständen können auch die Ressourcen (insbesondere Betriebsmittel und/oder Werkstoffe) eindeutige Kennungen aufweisen, anhand derer sie spezifiziert werden können und anhand derer weitere Informationen zu diesen Ressourcen aus einer oder mehrere Datenbanken erfasst werden können. Die Aussagen in dieser Beschreibung zu den eindeutigen Kennungen in Bezug auf Prozessgegenstände gelten analog auch für Ressourcen.

Es ist denkbar, dass die Aufgabeninformationen auch Prozessinformationen umfassen. Es ist jedoch auch denkbar, dass Prozessinformationen anhand von Informationen zum Prozessgegenstand (z.B. anhand der Kennung eines Prozessgegenstands) aus einer Datenbank ermittelt werden. Prozessinformationen spezifizieren den Prozess, dem ein Prozessgegenstand zugeführt werden soll.

Eine Prozessinformation kann beispielsweise die Prozessdauer sein. Es ist denkbar, dass für einen Prozess mehrere Zeitspannen definiert sind, beispielsweise eine Zeitspanne für die Gesamtdauer des Prozesses, eine oder mehrere Zeitspannen, in der / in denen ein oder mehrere Betriebsmittel verwendet werden (und daher in keinem anderen Prozess verwendet werden können), und/oder eine oder mehrere Zeitspannen, in der / in denen ein oder mehrere Mitarbeiter mit dem Prozess beschäftigt sind (und daher keine anderen Prozess ausführen können).

Ein Prozess kann einen oder mehrere Schritte umfassen. Die Prozessinformationen können Angaben über die einzelnen Schritte umfassen, z.B. welche Schritte auftreten, wie lange sie dauern, welche Betriebsmittel und/oder Werkstoffe und/oder Hilfsmittel für einen Prozessschritt erforderlich sind und/oder dergleichen.

Eine weitere Prozessinformation kann beispielsweise eine Reihenfolge sein. Es ist denkbar, dass ein Prozess erst dann ausgeführt werden kann, wenn vorher ein anderer Prozess ausgeführt worden ist. Ferner kann es sein, dass auf einen Prozess unmittelbar ein anderer Prozess folgen muss, um zu einem gewünschten Ergebnis zu kommen. Die Reihenfolge spezifiziert, ob für einen Prozess ein oder mehrere Vorgängerprozesse und/oder ein oder mehrere Nachfolgeprozesse erforderlich sind, und ggf. an welcher Stelle einer Prozesskette ein Prozess erfolgen soll.

Eine weitere Prozessinformation kann beispielsweise eine Angabe über das Betriebsmittel oder die Betriebsmittel umfassen, die für die Ausführung des Prozesses erforderlich sind. Die Prozessinformation kann ein Betriebsmittel und optional Spezifikationen für das Betriebsmittel spezifizieren. Denkbar ist auch, dass Spezifikationen für ein Betriebsmittel z.B. anhand einer eindeutigen Kennung aus einer oder mehreren Datenbanken ermittelt werden.

Eine weitere Prozessinformation kann beispielsweise eine Angabe über ein oder mehrere Werkstoffe umfassen, die in einem Prozess eingesetzt werden. Die Prozessinformation kann den jeweiligen Werkstoff und optional eine Menge und/oder eine Konzentration und/oder eine Reinheit und/oder dergleichen für den Werkstoff spezifizieren.

Eine weitere Prozessinformation kann beispielsweise eine Angabe über ein oder mehrere Hilfsmittel umfassen, die in einem Prozess eingesetzt werden. Die Prozessinformation kann ein Hilfsmittel und optional eine Menge und/oder eine Konzentration und/oder eine Reinheit und/oder dergleichen für das Hilfsmittel spezifizieren.

Sind alle zur Spezifizierung der Aufgabe(n) erforderlichen Informationen empfangen und/oder ermittelt worden, werden die für die Aufgabe(n) benötigten Ressourcen ermittelt. Ressourcen sind alle zur Erfüllung der Aufgabe(n) erforderlichen Mittel (insbesondere Mitarbeiter, Betriebsmittel, Werkstoffe und/oder Hilfsmittel). Informationen zu den vorhandenen Ressourcen sind üblicherweise in einer Datenbank oder in mehreren Datenbank gespeichert.

Die Informationen zu den vorhandenen Ressourcen (Ressourceninformationen) können in Mitarbeiterinformationen, Betriebsmittelinformationen, Werkstoffinformationen und ggf. Hilfsmittelinformationen unterteilt sein. Weitere Kategorien und Untergruppen von Ressourceninformationen sind denkbar.

Mitarbeiterinformationen umfassen eine Liste der vorhandenen Mitarbeiter. Mitarbeiterinformationen umfassen vorzugsweise auch Beschränkungen in Bezug auf die Mitarbeiter; beispielsweise ist ein Mitarbeiter nicht zu jeder Zeit verfügbar. Daher umfassen die Mitarbeiterinformationen vorzugsweise Mitarbeiterverfügbarkeiten. Vorzugsweise sind für jeden einzelnen Mitarbeiter individuelle Mitarbeiterverfügbarkeiten hinterlegt. Unter Mitarbeiterverfügbarkeiten werden Zeitspannen verstanden, in denen der jeweilige Mitarbeiter für die Durchführung eines oder mehrerer Prozesse verfügbar ist. Üblicherweise handelt es sich um die Dienstzeiten abzüglich der Pausen- und Urlaubszeiten sowie anderer geplanter Abwesenheiten (z.B. Dienstreise, Kur, Weiterbildung oder dergleichen). Die Mitarbeiterverfügbarkeiten sind üblicherweise in einer oder in mehreren Datenbanken gespeichert. Falls ein Mitarbeiter ungeplant (zum Beispiel infolge einer Krankheit) für eine Zeitspanne nicht verfügbar ist, kann die Mitarbeiterverfügbarkeit in der Datenbank entsprechend geändert (aktualisiert) werden.

Ferner können die Mitarbeiterinformationen Mitarbeiterprofile umfassen. Vorzugsweise gibt es für jeden einzelnen Mitarbeiter ein individuelles Mitarbeiterprofil. Es ist denkbar, dass zur Durchführung bestimmter Prozesse und/oder zum Einsatz bestimmter Betriebsmittel und/oder zum Umgang mit bestimmten Arten von (Prozess-)Gegenständen eine definierte Schulung erforderlich ist und/oder eine definierte Befähigung vorhanden sein muss und/oder eine Sachkenntnis nachgewiesen sein muss und/oder eine bestimmte körperliche Kondition vorliegen muss. Das Mitarbeiterprofil kann daher insbesondere angeben, welche Prozesse der Mitarbeiter durchführen kann und/oder darf und/oder welche Betriebsmittel der Mitarbeiter einsetzen kann und/oder darf und/oder mit welchen Arten von (Prozess-) Gegenständen der Mitarbeiter umgehen kann und/oder darf.

Die Betriebsmittelinformationen umfassen eine Liste der vorhandenen Betriebsmittel. Vorzugsweise umfassen die Betriebsmittelinformationen Betriebsmittelprofile. Ein Betriebsmittelprofil kann beispielsweise angeben, für welche Prozesse und/oder welche Arten von Prozessgegenständen das jeweilige Betriebsmittel eingesetzt werden kann und/oder darf. Es ist ferner denkbar, dass Betriebsmittel nur in definierten Zeitspannen eingesetzt werden können, zum Beispiel weil sie in anderen Zeitspannen anderweitig verwendet werden und/oder weil sie nur zu bestimmten Zeitspannen eingesetzt werden dürfen (zum Beispiel aus Gründen des Umweltschutzes, Emissionsschutzes, Lärmschutzes oder dergleichen) und/oder regelmäßige Wartungsarbeiten und/oder Qualitätsprüfungen erforderlich sind. Vorzugsweise umfassen die Betriebsmittelinformationen daher Betriebsmittelverfügbarkeiten, die angeben, wann ein Betriebsmittel einsatzbereit/verfügbar ist.

Die Werkstoffinformationen geben an, welche Werkstoffe in welchen Mengen und ggf. in welcher Reinheit und/oder Konzentration vorliegen und ggf. welchen Beschränkungen der Einsatz eines Werkstoffs unterliegt.

Es ist denkbar, dass die Ressourceninformationen auch Hilfsmittelinformationen umfassen. Die Hilfsmittelinformationen können beispielsweise angeben, welche Menge und/oder Konzentration und/oder Reinheit eines Hilfsmittels vorhanden ist und ggf. welchen Beschränkungen der Einsatz eines Hilfsmittels unterliegt.

In einem weiteren Schritt des erfindungsgemäßen Verfahrens wird ein Ablaufplan erstellt. Der Ablaufplan gibt eine Möglichkeit an, wie die Aufgaben mit den vorhandenen Ressourcen erledigt werden können. Dabei ist der Ablaufplan das Ergebnis eines Optimierungsverfahrens. Das bedeutet, dass im Hinblick auf ein Optimierungsziel derjenige Ablaufplan ermittelt wird, der das Optimierungsziel am ehesten erfüllt (wobei denkbar ist, dass bei der Optimierung nicht das globale Maximum oder Minimum identifiziert wird, sondern aus Gründen der Verfahrenseffizienz die Suche nach dem globalen Maximum oder Minimum nach einer definierten Zeitspanne abgebrochen und die beste bis zum Abbruch identifizierte Lösung (lokales Maximum oder Minimum) für die Erstellung eines Ablaufplans verwendet wird). Ferner ist denkbar, dass nicht alle Aufgaben in dem Ablaufplan berücksichtigt sind, insbesondere dann nicht, wenn der Ablaufplan für eine definierte Zeitspanne erstellt wird, diese Zeitspanne jedoch nicht ausreicht, um alle Aufgaben mit den gegebenen Ressourcen zu erledigen. Derartige, im Ablaufplan nicht berücksichtigte Aufgaben werden in dieser Beschreibung als unberücksichtigte Aufgaben bezeichnet.

Die Erstellung des Ablaufplans erfolgt vorzugsweise mittels eines linearen Optimierungsverfahrens. Als lineare Optimierung oder auch lineare Programmierung wird ein mathematisches Verfahren bezeichnet, bei dem eine Zielfunktion unter Beachtung verschiedener Nebenbedingungen (Restriktionen) minimiert oder maximiert wird, wobei die Variablen in Zielfunktion und Nebenbedingungen nur in der ersten Potenz auftreten.

Die Zielfunktion gibt hierbei an, nach welchen Kriterien der Ablaufplan zu optimieren ist. Die Randbedingungen ergeben sich zum Beispiel als Gleichungen und/oder Ungleichungen, welche die begrenzte Verfügbarkeit von Ressourcen in Relation zu den zu erfüllenden Aufgaben abbilden.

Diese Ausführungsform bietet den Vorteil, dass eines der zahlreichen bekannten linearen Optimierungsverfahren für die Optimierung herangezogen werden kann (siehe z.B. T. Unger, S. Dempe: Lineare Optimierung, Vieweg + Teubner, 2010, ISBN 978-3-8351-0139-5).

Besonders bevorzugt wird ein Verfahren der Gemischt-Ganzzahligen Linearen Optimierung verwendet (siehe z.B. R. Mansini et al.: Linear Mixed Integer Programing for Portfolio Optimization, Springer 2015, ISBN 978-3-319-18481-4).

Gemäß einer Ausführungsform der Erfindung wird mit der Zielfunktion die Anzahl der in einer definierten Zeitspanne prozessierten (einem Prozess zugeführten) Prozessgegenstände maximiert. Denkbar ist auch, dass die Zeitspanne zur Erfüllung aller anstehenden Aufgaben minimiert wird. Denkbar ist auch, dass die Auslastung der Betriebsmittel maximiert wird. Denkbar ist auch, dass die Zahl der in einer Zeitspanne zu prozessierenden Prozessgegenstände maximiert wird. Denkbar ist auch, dass die Zeitspannen, in denen Mitarbeiter untätig sind, minimiert wird. Denkbar ist auch, dass Kosten für die Stillzeiten von Betriebsmitteln minimiert werden. Denkbar ist auch, dass erledigte Aufgaben mit einem Wert verbunden sind, und dieser Wert maximiert wird. Weitere Optimierungsziele sind denkbar.

Auf Basis der zu erfüllenden Aufgabe(n) und des damit verbundenen Optimierungszieles wird eine entsprechende Zielfunktion formuliert (gebildet). Auf Basis der Ressourceninformationen werden entsprechende Randbedingungen formuliert (gebildet).

Die Formulierung der Zielfunktion und der Randbedingungen erfolgt vorzugsweise automatisiert. Entsprechende Programme, die auf Basis der Aufgabeninformationen und der Ressourceninformationen eine Zielfunktion mit Randbedingungen formulieren, lassen sich beispielsweise mittels Python, Matlab und/oder anderen vergleichbaren Programmiersprachen erzeugen.

Die mathematischen (Un-)Gleichungen lassen sich dann an einem Computerprogramm zur Lösung von linearen (Un)-Gleichungssystemen zuführen (z.B. Gurobi™ Solver (www.gurobi.com)). Die Lösung des (Un)-Gleichungssystems wird dann in einen Ablaufplan transformiert. Beispiele für die Erstellung von Ablaufplänen finden sich in EP3188096A1 und US20160148137.

Der Ablaufplan oder Teile davon können auf einer Ausgabeeinheit ausgegeben werden. Dabei können der Ablaufplan oder Teile davon auf einem Bildschirm angezeigt, auf einem Drucker ausgegeben und/oder in einem Datenspeicher gespeichert werden. Vorzugsweise wird der Ablaufplan grafisch dargestellt. Vorzugsweise umfasst der Ablaufplan verschiedene Ansichten wie beispielsweise eine Darstellung, in der für einen oder mehrere Mitarbeiter dargestellt ist, zu welchen Zeiten sie welche Prozessgegenstände einem oder mehreren Prozessen zuführen und/oder welche Prozesse sie ausführen, und/oder eine Darstellung, in der für ein oder für mehrere Betriebsmittel dargestellt ist, in welchen Zeitspannen sie in der Ausführung welcher Prozess eingesetzt werden. Weitere Ansichten sind denkbar. In einer bevorzugten Ausführungsform werden für jeden einzelnen Mitarbeiter oder eine Gruppe von Mitarbeitern, der/die mindestens einen Prozess im Rahmen des erstellten Ablaufplans ausführt, ein individueller Mitarbeiter(gruppen)-Ablaufplan erstellt und vorzugsweise nur gegenüber dem Mitarbeiter (der Mitarbeitergruppe) und ggf. einem oder mehreren Fachvorgesetzten und/oder disziplinarisch Vorgesetzen des Mitarbeiters (der Mitarbeitergruppe) angezeigt. Der individuelle Mitarbeiter(gruppen)-Ablaufplan zeigt für den jeweiligen Mitarbeiter (die jeweilige Mitarbeitergruppe) Zeitspannen und diejenigen Prozesse, die er (sie) in den Zeitspannen ausführen soll, an. Vorzugsweise ist das erfindungsgemäße Computersystem so konfiguriert, dass Mitarbeiter(gruppen) nur diejenigen Teile des Ablaufplans einsehen (sich ausgeben lassen können), die sie betreffen.

In einer bevorzugten Ausführungsform liegen Betriebsmittelinformationen, Mitarbeiterinformationen, ggf. Hilfsmittelinformationen und Aufgabeninformationen in tabellarischer Form in einer oder in mehreren relationalen Datenbanken vor. Das erfindungsgemäße Computersystem ist konfiguriert, "auf Knopfdruck" mittels der gespeicherten Daten die Nutzungsfunktion inklusive der Randbedingungen zu ermitteln bzw. zu parametrisieren, das entstandene (Un-)Gleichungssystem zu lösen und die Lösung in Form eines Ablaufplans grafisch darzustellen.

Das Computersystem kann konfiguriert sein, einen Ablaufplan für eine definierte Zeitspanne zu erstellen, wie beispielsweise für einen Tag, oder mehrere Tage (2, 3, 4, 5 oder 6 Tage) oder eine Arbeitswoche oder eine Woche oder zwei Wochen oder drei Wochen oder vier Wochen oder einen Monat oder mehrere Monate. Es ist denkbar, dass nicht alle zu erledigenden Aufgaben in der definierten Zeitspanne erledigt werden können; es ist also denkbar, dass nach Erstellen eines Ablaufplans für eine definierte Zeitspanne Aufgaben verbleiben, die in dem Ablaufplan nicht berücksichtigt sind. Vorzugsweise ist das erfindungsgemäße Computersystem konfiguriert, derartige verbleibende Aufgaben auszugeben, zum Beispiel auf einem Bildschirm anzuzeigen, auf einem Drucker auszudrucken und/oder in einem Datenspeicher zu speichern.

Nachdem ein Ablaufplan erstellt und die bestehenden Ressourcen auf die Prozesse verteilt worden sind, um die vorliegende(n) Aufgabe(n) zu erfüllen, werden für eine Ressource oder für mehrere Ressourcen ein oder mehrere Auslastungswerte ermittelt. Der Auslastungswert für eine Ressource gibt an, wieviel der Kapazität der Ressource innerhalb einer definierten Zeitspanne bereits Vorgängen (Prozessen) zugeordnet ist. Aus dem Auslastungswert lässt sich demnach ermitteln, welche Ressourcen noch Kapazität für weitere Vorgänge hätten und welche Ressourcen bereits vollständig ausgelastet sind und damit keine Kapazität für weitere Vorgänge mehr aufweisen. Vorzugsweise handelt es sich bei dem Auslastungswert um einen Auslastungsgrad, das ist der Anteil der beanspruchten Kapazität der Ressource an der insgesamt verfügbaren Kapazität innerhalb einer definierten Zeitspanne. Die Zeitspanne kann diejenige Zeitspanne sein, für die der Ablaufplan erstellt worden ist. Es kann sich jedoch auch um eine Zeitspanne innerhalb der Zeitspanne, für die der Ablaufplan erstellt worden ist, handeln. Denkbar ist auch, dass die Zeitspanne mehrere Zeitspannen, für die Ablaufpläne erstellt worden sind, zumindest anteilig umfasst.

Da die Auslastung üblicherweise über die Zeitspanne nicht konstant ist, ist der Auslastungswert (ggf. der Auslastungsgrad) üblicherweise ein Mittelwert, vorzugsweise das arithmetische Mittel.

Die Berechnung eines Auslastungsgrades sei für eine Maschine (Betriebsmittel) an einem Beispiel erläutert. Dazu sei zunächst angenommen, dass die Maschine prinzipiell dauerhaft (24 Stunden am Tag, 365 Tage im Jahr) eingesetzt werden kann (=vorhandene Kapazität). Wird die Maschine im Rahmen eines erstellten Ablaufplans jedoch nur 2 Stunden pro Tag (wertschöpfend) eingesetzt, so ist die beanspruchte Kapazität (2 h/Tag) geringer als die vorhandene Kapazität; der Auslastungsgrad beträgt 2 / 24 = 1 /12 = 0,083̅ = 8,3̅ %. Selten ist eine Maschine dauerhaft (wertschöpfend) einsetzbar. Daher müssen üblicherweise Umrüstzeitspannen, Wartungs- und Reparaturzeitspannen, Ruhezeitspannen und andere Zeitspannen, in denen die Maschinen nicht (wertschöpfend) einsatzfähig ist, abgezogen werden, um die vorhandene (wertschöpfende) Kapazität zu errechnen.

In einer bevorzugten Ausführungsform werden Auslastungswerte für Betriebsmittel und/oder Gruppen von Betriebsmitteln berechnet. Eine Gruppe von Betriebsmitteln kann beispielsweise eine Verpackungslinie sein, die aus verschiedenen Einheiten (die jede für sich ein Betriebsmittel sein kann) besteht. Vorzugsweise werden auch für Mitarbeiter und/oder Mitarbeitergruppen Auslastungswerte berechnet. Auch für Werkstoffe können Auslastungswerte errechnet werden.

Vorzugsweise gibt es zu jedem berechneten Auslastungswert mindestens einen Referenzwert. Jeder Auslastungswert wird mit (seinem) mindestens einen Referenzwert verglichen. Bei einer definierten Abweichung zwischen dem jeweiligen Auslastungswert und (seinem) mindestens einen Referenzwert wird eine Mitteilung über die Abweichung erstellt und ausgegeben.

Die Ausgabe erfolgt mit Hilfe einer Ausgabeeinheit. Die Mitteilung kann beispielsweise auf einem Bildschirm angezeigt, auf einem Drucker ausgegeben und/oder in einem Datenspeicher gespeichert werden.

In einer bevorzugten Ausführungsform gibt es zu jedem berechneten Auslastungsgrad einen oberen Schwellenwert als Referenzwert. Ist der berechnete Auslastungsgrad größer als der Schwellenwert, so kann dies darauf hindeuten, dass die jeweilige Ressource im Rahmen des bestehenden Ablaufplans so hoch ausgelastet ist, dass sie einen Engpass für die zu erfüllenden Aufgaben darstellen kann. Vorzugsweise liegt der Schwellenwert im Bereich von 0,9 bis 1 bzw. 90 % bis 100 %.

Die Mitteilung über die Abweichung umfasst in einem solchen Fall vorzugsweise eine Angabe über die jeweilige Ressource, bei der der Abweichungsgrad oberhalb des oberen Schwellenwerts liegt, und optional eine Angabe über die Höhe des Abweichungsgrades und/oder eines Wertes, der mit der Höhe des Abweichungsgrades korreliert. Anhand der Mitteilung kann ein Nutzer erkennen, welche Ressourcen stark ausgelastet sind. Hier kann es sein, dass die jeweilige Ressource bereits einen Engpass darstellt; zumindest besteht die Gefahr, dass die jeweilige Ressource zum Engpass werden könnte (zum Beispiel dann, wenn sie unerwartet ausfällt).

In einer bevorzugten Ausführungsform gibt es zu jedem berechneten Auslastungsgrad einen unteren Schwellenwert als Referenzwert. Ist der berechnete Auslastungsgrad kleiner als der Schwellenwert, so kann dies darauf hindeuten, dass die jeweilige Ressource im Rahmen des bestehenden Ablaufplans unterausgelastet ist. Vorzugsweise liegt der Schwellenwert im Bereich von 0 bis 0,5 bzw. 0 % bis 50 %.

Die Mitteilung über die Abweichung umfasst in einem solchen Fall vorzugsweise eine Angabe über die jeweilige Ressource, bei der der Abweichungsgrad unterhalb des unteren Schwellenwerts liegt, und optional eine Angabe über die Höhe des Abweichungsgrades und/oder eines Wertes, der mit der Höhe des Abweichungsgrades korreliert. Anhand der Mitteilung kann ein Nutzer erkennen, welche Ressourcen unterausgelastet sind. Hier besteht die Möglichkeit, die Ressource gegen eine kostengünstigere Ressource mit geringerer vorhandener Kapazität auszutauschen und/oder eine Umrüstung und/oder Qualifizierung der Ressource vorzunehmen, so dass sie für Prozesse eingesetzt werden kann, für die sie bisher nicht eingesetzt worden ist, um stark ausgelastete Ressourcen zu entlasten.

In einer besonders bevorzugten Ausführungsform werden für jeden berechneten Auslastungsgrad die berechneten Auslastungsgrade mit einem oberen Schwellenwert und mit einem unteren Schwellenwert vergleichen. Für alle Ressourcen, bei denen der Auslastungsgrad entweder oberhalb des oberen Schwellenwertes oder unterhalb des unteren Schwellenwertes liegt, erfolgt eine oder erfolgen mehrere Mitteilungen. In der Mitteilung/den Mitteilungen sind die jeweiligen Ressourcen spezifiziert; optional sind die Höhen der Auslastungsgrade oder mit den Höhen der Auslastungsgrade korrelierende Werte angegeben.

Vorzugsweise werden Paare oder Gruppen korrespondierender Ressourcen erzeugt. Korrespondierende Ressourcen sind Ressourcen derselben Art. Alle Mitarbeiter können eine Ressource derselben Art sein. Die Mitarbeiter innerhalb einer Gruppe von Mitarbeitern können eine Ressource derselben Art sein. Betriebsmittel, die vergleichbare Funktionen ausführen (Drucken, Schneiden, Bewegen, etc.), können Ressourcen derselben Art sein.

Beispielsweise können Mitarbeiter, die stark ausgelastet sind, denjenigen Mitarbeitern gegenübergestellt werden, die unterausgelastet sind. In der Regel werden die unterausgelasteten Mitarbeiter nicht unmittelbar Aufgaben der stark ausgelasteten Mitarbeiter übernehmen können, denn ansonsten hätte man eine gleichmäßige Verteilung der Aufgaben bereits bei der Erstellung des Ablaufplans über eine entsprechende Zielfunktion oder Rahmenbedingungen erreichen können. Ein Nutzer kann jedoch aus einer solchen Gegenüberstellung ableiten, welche der unterausgelasteten Mitarbeiter qualifiziert werden können, Aufgaben der stark ausgelasteten Mitarbeiter zu übernehmen. Es können entsprechende Qualifizierungsmaßnahmen getroffen werden, um die bestehenden Engpässe zu beheben und langfristig eine höhere Leistung zu erzielen.

Bei dem Vergleich der Auslastungsgrade von Ressourcen, die innerhalb eines Prozesses oder einer Prozesskette eingesetzt werden, können diejenigen Ressourcen identifiziert werden, die für den jeweiligen Prozess oder die Prozesskette geschwindigkeitsbestimmend sind (und damit einen Engpass darstellen). Anschließend können Maßnahmen ergriffen werden, die geschwindigkeitsbestimmenden Ressourcen zu stärken. Auch dies führt langfristig zu einer Leistungssteigerung.

Die Erfindung wird nachfolgend anhand von Figuren näher erläutert, ohne die Erfindung auf die in den Figuren gezeigten Merkmale und Merkmalskombinationen beschränken zu wollen.

Es zeigen:

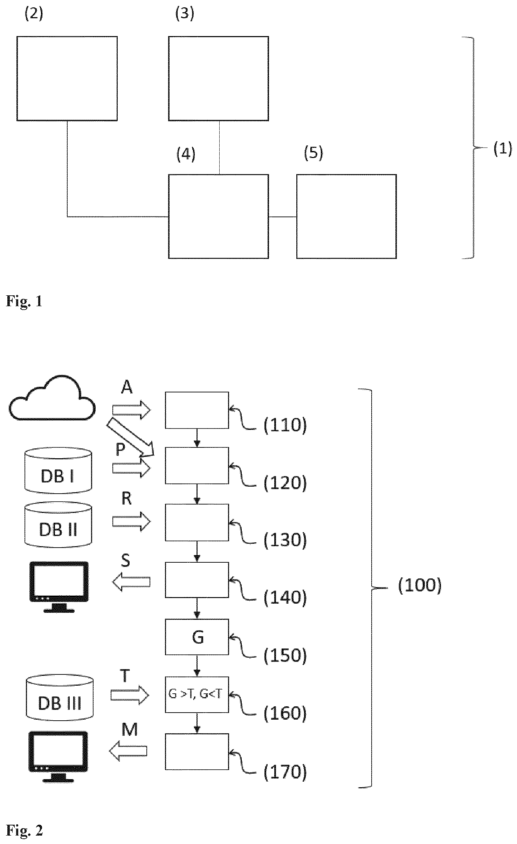

Fig. 1 zeigt beispielhaft und schematisch eine Ausführungsform eines erfindungsgemäßen Computersystems.

Das Computersystem (1) umfasst eine Datenbank (2), eine Empfangseinheit (3), eine Steuer- und Recheneinheit (4) und eine Ausgabeeinheit (5).

In der Datenbank (2) sind Informationen zu den vorhandenen Ressourcen, insbesondere den vorhandenen Mitarbeitern und Betriebsmitteln vorzugsweise in Tabellenform gespeichert.

Über die Empfangseinheit (3) werden Aufgabeninformationen empfangen, die Auskunft über Prozessgegenstände geben, die einem oder mehreren Prozessen zugeführt werden sollen. Die Steuer- und Recheneinheit (4) dient der Steuerung der Komponenten des Computersystems und der Koordinierung der Datenflüsse. Mittels der Steuer- und Recheneinheit (4) wird auf Basis der in der Datenbank (2) gespeicherten Daten und der über die Empfangseinheit (3) empfangenen Informationen ein Ablaufplan erstellt.

Der Ablaufplan oder ein Teil davon kann über die Ausgabeeinheit (5) ausgegeben werden. Mittels der Steuer- und Recheneinheit (4) werden ferner Auslastungswerte für die Ressourcen, die zur Ausführung der Prozesse gemäß dem berechneten Ablaufplan verwendet und/oder eingesetzt werden, für eine Zeitspanne ermittelt. Mittels der Steuer- und Recheneinheit (4) werden die Auslastungswerte mit Referenzwerten verglichen und bei einer definierten Abweichung eine oder mehrere Mitteilungen über die Ausgabeeinheit (5) ausgegeben.

Fig. 2 zeigt beispielhaft und schematisch in Form eines Ablaufdiagramms eine Ausführungsform des erfindungsgemäßen Verfahrens. Das Verfahren (100) umfasst die Schritte:
- (110): Empfangen von Aufgabeninformationen (A), wobei die Aufgabeninformationen (A) zumindest eine Mehrzahl von Prozessgegenständen spezifizieren, die jeweils einem oder mehreren Prozessen zugeführt werden sollen,
- (120): Empfangen und/oder Ermitteln von Prozessinformationen (P), wobei die Prozessinformationen (P) die Prozesse spezifizieren, denen die Prozessgegenstände zugeführt werden sollen,
- (130): Ermitteln von Ressourceninformationen (R), wobei die Ressourceninformationen (R) diejenigen Ressourcen spezifizieren, die zur Ausführung der Prozesse eingesetzt werden sollen und/oder können,
- (140): Erstellen eines Ablaufplans (S) anhand der Aufgabeninformationen (A), der Prozessinformationen (P) und der Ressourceninformationen (R), wobei der Ablaufplan (S) Angaben darüber umfasst,
- in welchen Zeitspannen die Prozesse ausgeführt werden sollen und
- welche Ressourcen zur Ausführung der Prozesse eingesetzt werden sollen, wobei der Ablaufplan im Hinblick auf ein Optimierungsziel optimiert ist,
- (150): Ermitteln mindestens eines Auslastungswerts (G) für eine Ressource,
- (160): Vergleichen des mindestens einen Auslastungswerts (G) mit einem Referenzwert (T),
- (170): im Fall einer definierten Abweichung des Auslastungswerts (G) von dem Referenzwert (T): Ausgeben einer Mitteilung (M) über die Abweichung.

Die Aufgabeninformationen werden üblicherweise über ein Netzwerk, mit dem das erfindungsgemäße Computersystem verbunden ist, elektronisch übermittelt (dargestellt durch die "Cloud" als Quelle der Aufgabeninformationen (A)). Sie können auch von einem Nutzer über eine Eingabeeinheit des erfindungsgemäßen Computersystems eingegeben werden.

Die Prozessinformationen (P) können ebenfalls über ein Netzwerk elektronisch übermittelt werden. Denkbar ist auch, dass Prozessinformationen (P) von einem Nutzer über eine Eingabeeinheit des erfindungsgemäßen Computersystems eingegeben und/oder aus einer Datenbank (DB I) ausgelesen werden.

Die Ressourceninformationen (R) werden üblicherweise anhand der Aufgabeninformationen (A) und der Prozessinformationen (P) aus einer Datenbank (DB II) ermittelt.

Der Ablaufplan (S) kann über eine Ausgabeeinheit des erfindungsgemäßen Computersystems gegenüber einem Nutzer ausgegeben, z.B. auf einem Monitor angezeigt werden.

Der mindestens eine Auslastungswert G wird anhand des Ablaufplans für eine definierte Zeitspanne ermittelt. Vorzugsweise wird für jede der in dem Ablaufplan verwendeten Ressource ein Auslastungswert G ermittelt.

Vorzugsweise wird/werden für jeden ermittelten Auslastungswert mindestens ein, vorzugsweise zwei Referenzwerte T (z.B. ein oberer Schwellenwert und ein unterer Schwellenwert) z.B. aus einer Datenbank (DB III) ermittelt und mit dem Auslastungswert verglichen.

Bei einer definierten Abweichung wird mindestens eine Mitteilung über eine Ausgabeeinheit des erfindungsgemäßen Computersystem an einen Nutzer ausgegeben. Die mindestens eine Mitteilung umfasst vorzugsweise eine Angabe über diejenigen Ressourcen, bei denen der Auslastungswert in definierter Weise von mindestens einem Referenzwert abweicht sowie optional eine Angabe über die Höhe der Abweichung und/oder die Höhe des Auslastungsgrades.

Bei den Datenbanken DB I, DB II und DB III kann es sich um eine einzige oder um eine beliebige Anzahl mehrerer Datenbanken handeln. So können insgesamt eine, zwei, drei, vier oder allgemein N Datenbanken vorhanden sein, wobei N eine ganze Zahl größer oder gleich 1 ist. Das heißt, dass jede der Datenbanken DB I, DB II und DB III auch ein Bestandteil einer anderen Datenbank oder eine Mehrzahl an Datenbanken sein kann.

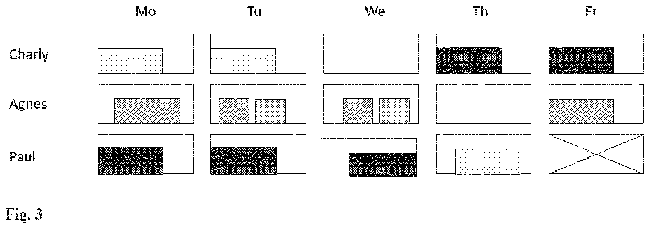

Fig. 3 zeigt ein Beispiel für einen Ablaufplan. Es ist ein Ablaufplan für eine Arbeitswoche mit den Arbeitstagen Montag bis Freitag (Mo, Tu, We, Th, Fr) dargestellt. Für die einzelnen Mitarbeiter (*Charly, Agnes, Paul*) ist dargestellt, an welchen Tagen sie welche Aufgabe zu erledigen haben. Die jeweilige Aufgabe ist als Schraffur gekennzeichnet. Die Schraffuren können verschiedene Bedeutungen haben, beispielsweise kann eine Schraffur einen Prozess kennzeichnen, den der jeweilige Mitarbeiter ausführen soll. Ferner kann eine Schraffur einen Prozessgegenstand oder eine Menge von Prozessgegenständen kennzeichnen, um die sich der jeweilige Mitarbeiter kümmern soll (indem er sie einem oder mehreren Prozessen zuführt). Ferner kann eine Schraffur ein Betriebsmittel kennzeichnen, das von dem jeweiligen Mitarbeiter bedient werden soll (wobei der jeweilige Mitarbeiter mit dem Betriebsmittel einen oder mehrere Prozesse an einem oder an mehreren Prozessgegenständen ausführt). Die Schraffur kann jedoch auch eine Kombination aus mehreren Gegenständen (Prozess, Prozessgegenstand, Betriebsmittel) kennzeichnen. Die Größe der schraffierten Fläche kann die Zeitspanne kennzeichnen, in denen der jeweilige Mitarbeiter mit der jeweiligen Aufgabe beschäftigt ist. Der Beginn und das Ende der schraffierten Fläche innerhalb des Rechtecks für den jeweiligen Tag und Mitarbeiter können beispielsweise Anfang und Ende der Tätigkeiten des jeweiligen Mitarbeiters anzeigen. Das Rechteck für den Mitarbeiter *Paul* am Freitag ist mit einem Kreuz versehen, was anzeigen soll, dass er Freitag nicht verfügbar ist.

Weitere Ablaufpläne und Darstellungen sind denkbar. Vorzugsweise sind das erfindungsgemäße Computersystem und das erfindungsgemäße Computerprogramm so konfiguriert, dass Ablaufpläne nicht nur für Mitarbeiter, sondern auch für Prozessgegenstände und/oder Betriebsmittel erzeugt und ausgegeben werden können. Dabei kann ein Ablaufplan für Prozessgegenstände anzeigen, welcher Prozess an den Prozessgegenständen in welchen Zeitspannen ausgeführt werden sollen und/oder welche Betriebsmittel für die Prozessierung der Prozessgegenstände in welchen Zeitspannen verwendet werden sollen und/oder welche Mitarbeiter die Prozessgegenstände in welchen Zeitspannen betreuen sollen. Ein Ablaufplan für Betriebsmittel kann anzeigen, welche Betriebsmittel zu welchen Zeitspannen verwendet werden sollen (z.B. von welchen Mitarbeitern, mit welchen Prozessgegenständen und/oder welche Prozess ausgeführt werden sollen).

## Patentansprüche

1. Computersystem umfassend:
- eine Datenbank oder mehrere Datenbanken, in der / in denen Ressourceninformationen über Ressourcen gespeichert sind,
- eine Empfangseinheit
- eine Steuer- und Recheneinheit und
- eine Ausgabeeinheit,
wobei die Steuer- und Recheneinheit konfiguriert ist, die Empfangseinheit zu veranlassen, Aufgabeninformationen zu empfangen, wobei die Aufgabeninformationen zumindest eine Mehrzahl von Prozessgegenständen spezifizieren, die jeweils einem oder mehreren Prozessen zugeführt werden sollen,
wobei die Steuer- und Recheneinheit konfiguriert ist, anhand der Aufgabeninformationen Prozesse zu spezifizieren, denen die Prozessgegenstände zugeführt werden sollen,
wobei die Steuer- und Recheneinheit konfiguriert ist, anhand der spezifizierten Prozesse Ressourcen zu spezifizieren, die zur Ausführung der Prozesse eingesetzt werden sollen,
wobei die Steuer- und Recheneinheit konfiguriert ist, einen Ablaufplan zu erstellen, wobei der Ablaufplan Angaben darüber umfasst,
∘ in welchen Zeitspannen die Prozesse ausgeführt werden sollen und
∘ welche Ressourcen zur Ausführung der Prozesse eingesetzt werden sollen,
wobei der Ablaufplan im Hinblick auf ein Optimierungsziel optimiert ist,
wobei die Steuer- und Recheneinheit konfiguriert ist, für mindestens eine Ressource einen Auslastungswert zu ermitteln, den Auslastungswert mit einem Referenzwert zu vergleichen und bei einer definierten Abweichung des Auslastungswerts die Ausgabeeinheit zu veranlassen, eine Mitteilung über die Abweichung auszugeben.

2. Computersystem gemäß Anspruch 1, wobei die Steuer- und Recheneinheit konfiguriert ist, anhand der Ressourceninformationen und der Aufgabeninformationen ein System aus Gleichungen und/oder Ungleichungen zu erstellen, das System aus Gleichungen und/oder Ungleichungen mittels eines Optimierungsverfahrens vorzugsweise mittels eines Verfahrens der Gemischt-Ganzzahligen Linearen Optimierung zu lösen, und die Lösung in den Ablaufplan zu transformieren.

3. Computersystem gemäß einem der Ansprüche 1 oder 2, wobei die Steuer- und Recheneinheit konfiguriert ist, für eine Mehrzahl an Ressourcen, die gemäß Ablaufplan eingesetzt werden, jeweils einen Auslastungswert für eine definierte Zeitspanne zu ermitteln, wobei die definierte Zeitspanne, diejenige Zeitspanne, für die der Ablaufplan erstellt worden ist, zumindest anteilig umfasst.

4. Computersystem gemäß einem der Ansprüche 1 bis 3, wobei die Steuer- und Recheneinheit konfiguriert ist, für eine Mehrzahl an Ressourcen, die gemäß Ablaufplan eingesetzt werden, jeweils einen Auslastungswert zu ermitteln und diesen Auslastungswert mit mindestens einem Referenzwert zu vergleichen.

5. Computersystem gemäß einem der Ansprüche 1 bis 4, wobei die Steuer- und Recheneinheit konfiguriert ist,
- für eine Mehrzahl an Ressourcen, die gemäß Ablaufplan eingesetzt werden, jeweils einen Auslastungsgrad zu ermitteln,
- diesen Auslastungsgrad mit einem oberen Schwellenwert und/oder mit einem unteren Schwellenwert zu vergleichen,
- diejenigen Ressourcen in der eine Mitteilung oder in mehreren Mitteilungen aufzuführen, für die der Auslastungsgrad größer als der obere Schwellenwert oder kleiner als der untere Schwellenwert ist.

6. Computersystem gemäß Anspruch 5, wobei die Steuer- und Recheneinheit konfiguriert ist, in der mindestens einen Mitteilung Ressourcen, für die der Auslastungsgrad größer als der obere Schwellenwert ist, Ressourcen derselben Art gegenüberzustellen, für die der Auslastungsgrad kleiner als der untere Schwellenwert ist.

7. Computersystem gemäß einem der Ansprüche 1 bis 6, wobei die Steuer- und Recheneinheit konfiguriert ist, diejenigen Ressourcen zu definieren, die innerhalb eines Prozesses oder einer Prozesskette den höchsten Auslastungsgrad aufweisen.

8. Verfahren umfassend die Schritte:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Ressourceninformationen, wobei die Ressourceninformationen diejenigen Ressourcen spezifizieren, die zur Ausführung der Prozesse eingesetzt werden sollen und/oder können,
- Erstellen eines Ablaufplans anhand der Aufgabeninformationen, der Prozessinformationen und der Ressourceninformationen, wobei der Ablaufplan Angaben darüber umfasst,
• in welchen Zeitspannen die Prozesse ausgeführt werden sollen und
• welche Ressourcen zur Ausführung der Prozesse eingesetzt werden sollen,
wobei der Ablaufplan im Hinblick auf ein Optimierungsziel optimiert ist,
- Ermitteln mindestens eines Auslastungswerts für eine Ressource,
- Vergleichen des mindestens einen Auslastungswerts mit einem Referenzwert,
- Im Fall einer definierten Abweichung des Auslastungswerts von dem Referenzwert: Ausgeben einer Mitteilung über die Abweichung.

9. Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte auszuführen:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Ressourceninformationen, wobei die Ressourceninformationen diejenigen Ressourcen spezifizieren, die zur Ausführung der Prozesse eingesetzt werden sollen und/oder können,
- Erstellen eines Ablaufplans anhand der Aufgabeninformationen, der Prozessinformationen und der Ressourceninformationen, wobei der Ablaufplan Angaben darüber umfasst,
• in welchen Zeitspannen die Prozesse ausgeführt werden sollen,
• welche Ressourcen zur Ausführung der Prozesse eingesetzt werden sollen,
wobei der Ablaufplan im Hinblick auf ein Optimierungsziel optimiert ist,
- Ermitteln mindestens eines Auslastungswerts für eine Ressource,
- Vergleichen des mindestens einen Auslastungswerts mit einem Referenzwert,
- Im Fall einer definierten Abweichung des Auslastungswerts von dem Referenzwert: Ausgeben einer Mitteilung über die Abweichung.

10. Computerprogrammprodukt gemäß Anspruch 9, wobei das Computerprogramm ein Computersystem gemäß einem der Ansprüche 1 bis 7 veranlasst, einen oder mehrere Schritte des Verfahrens gemäß Anspruch 8 auszuführen.

11. Verwendung eines Computersystems gemäß einem der Ansprüche 1 bis 7 und/oder eines Computerprogrammprodukts gemäß einem der Ansprüche 9 oder 10 Computersystems zum Identifizieren von Engpässen in Ablaufplänen für das Herstellen und/oder Verpacken von Gegenständen, insbesondere von Arzneimitteln, Pflanzenschutzmitteln, Schädlingsbekämpfungsmitteln und/oder Saatgut.
